# EUROPEAN PATENT APPLICATION

(11) **EP 2 360 764 A1**
(43) Date of publication of application: **24.08.2011**
(21) Application number: 09827530.8
(22) Date of filing: 16.11.2009
(51) Int. Cl.: H01M 8/04, H01M 8/00, H01M 8/06

(54) **MCFC POWER GENERATION SYSTEM AND METHOD FOR OPERATING SAME**

(30) Priority: 18.11.2008 JP 2008294106
(71) Applicant: Tokyo Gas Co., Ltd., Tokyo 105-8527 (JP)
(72) Inventor: UEMATSU Hiroyoshi, Yokohama-shi Kanagawa 241-0002 (JP); WATANABE Akimune, Tokyo 110-0016 (JP); KAMEYAMA Hiromichi, Tokyo 105-8527 (JP)
(74) Representative: Strehl Schübel-Hopf & Partner
(86) International application number: PCT/JP2009/069429
(87) International publication number: WO 2010/058749

(57) **Abstract**

Disclosed is an MCFC power generation system and a method for operating the same enabling significant reduction of CO₂ emission or substantially zero CO₂ emission by minimizing the equipment added to a general power generation facility to a minimum, enabling both high power generation efficiency and high heat recovery efficiency, enabling adjustment of the voltage and output of the fuel cell in a certain range by adjusting the cathode gas composition, enabling great variation of the ratio between the heat and electricity, and thereby enabling variable thermoelectric operation. The MCFC generation system includes a cathode gas circulation system in which the cathode gas is circulated by a cathode gas recycle blower, and a closed loop is formed. Oxygen consumed by power generation is supplied from an oxygen supply plant, and CO₂ is supplied from recycled CO₂. Combustible components in anode exhaust are burned with oxygen, the resultant gas is cooled, and water is removed. The fuel gases in the anode exhaust is recycled.

## Description

### Technical Field

The present invention belongs to the field of energy transduction equipment, and is related to a fuel cell which directly transforms chemical energy that fuel gas contains into electricity. In particular, the present invention relates to an MCFC gas-turbine hybrid system that increases the power generation efficiency of molten carbonate fuel cells (MCFC), makes recovery of CO₂ easy, and further enables operations such as thermoelectric conversion, gives flexibility to a system so as to enable free adjustment of cathode gas composition, thereby contributing to effective use of energy resources and improvement of earth environment, and a method of operating the same.
Hereinafter, in this application, a MCFC-gas turbine hybrid system is simply described as "MCFC power generation system."

### Background Art

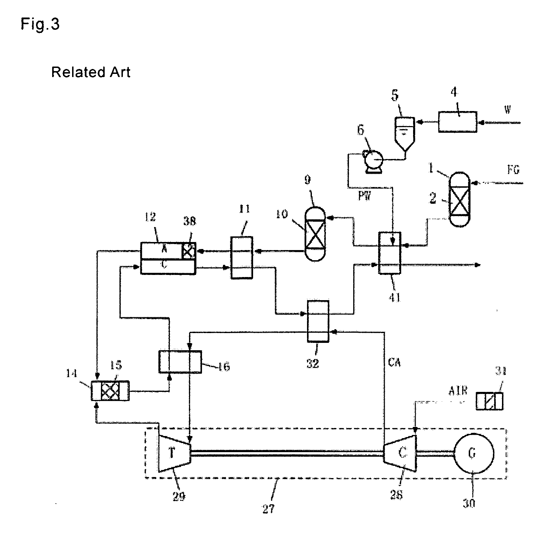

Fig. 3 is a configuration diagram of conventional MCFC power generation system (MCFC-gas turbine hybrid system).
A fuel gas FG, such as urban gas, is led to a fuel humidifier 41, following desulfurization by a desulfurization agent 2 in a desulfurizer 1. Here, the fuel gas is heated by the cathode exhaust of MCFC12, during which treatment water PW is sprayed on and evaporated; the preheated mixed gas of the fuel gas and vapor is then led to a pre-converter 9. The treatment water used here is supplied to a fuel humidifier 41 through a treatment tank 5 by a pump 6, after supply water W is treated in a water treatment device 4.
The pre-converter 9 is a type of reformer, which contains a reforming catalyst 10, but does not include a heat source, and mainly modifies components heavier than ethane using its own sensible heat, and reforming of methane hardly occurs. The gas that outlets pre-converter 9 is heated to a temperature near working temperature of fuel cell by a fuel heater 11, and is supplied to MCFC12. MCFC12 is of an internal reforming type and an internal reformer 38 is built into the fuel cell.

Although about 70% of the total amount of H₂ and CO reformed and generated at anode A is used in the power generation reaction (H₂ + CO₃²⁻ -> H₂O + CO₂ + 2e⁻), the remainder is led to the catalytic combustor 14 as anode exhaust. Here, the anode exhaust is mixed with air, which is the gas turbine exhaust, and the flammable component in the anode exhaust is combusted by combustion catalyst 15. The combustion gas with increased temperature is cooled by heat-exchanging with compressed air CA in a high temperature heat exchanger 16, and is then supplied to cathode C.
At cathode C, CO₂ and oxygen are partly consumed in the power generation reaction (CO₂ + 1/2O₂ + 2e⁻ -> CO₃²-) and discharged from cathode C. The cathode exhaust provides heat to the fuel side in fuel heater 11, flows into a low-temperature regeneration heat exchanger 32 to preheat compressed air, then provides heat to the fuel side in fuel humidifier 41, and is then emitted in the atmosphere.
On the other hand, gas turbine generator 27 comprises a compressor 28, a turbine 29, and an electric generator 30 connected by a single axis; air AIR is compressed by the compressor 28 through filter 31, and the compressed air CA is preheated in the low-temperature regeneration heat exchanger 32, is subsequently heated to a predetermined temperature in the high temperature heat exchanger 16, and flows in to the turbine 29. In turbine 29, work is done in the process of expanding to near atmospheric pressure, and the exhaust is supplied to the cathode through catalytic combustor 14 and high temperature heat exchanger 16. In gas turbine generator 27, the shaft output obtained by subtracting power for compressor 28 and mechanical loss from the output of turbine 29 is transmitted to electric generator 30, thereby obtaining alternate current by use of exhaust heat of fuel cell.

Although this system has high power generation efficiency, and thus reduces the amount of CO₂ discharge, in the end, CO₂ generated from fuel gas, such as urban gas, externally-supplied, is completely contained in the cathode exhaust, and emitted in the atmosphere. Moreover, since gas turbine generator 27 recovers the heat emitted from MCFC12, the temperature of the cathode exhaust becomes very low in the end, collection of steam from the exhaust is impossible.

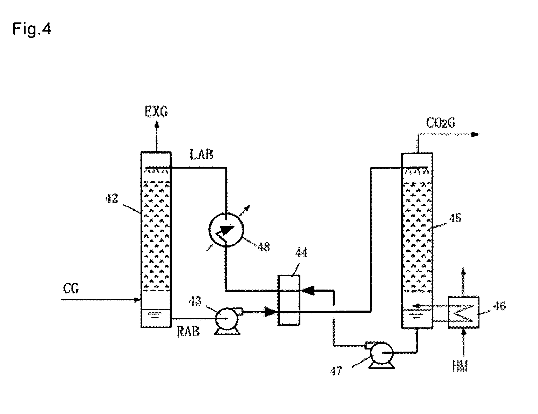

Fig. 4 is a configuration diagram of the apparatus used for separation and recovery of CO₂ from combustion fuel gas.
Combustion fuel gas CG enters absorption tower 42 from the bottom part and contacts absorbent liquid LAB in the process until it is discharged from the top part, during which CO₂ in the combustion fuel gas is absorbed by absorbent liquid LAB. After absorbing CO₂, absorbent liquid RAB is pressurized by pump 43, preheated by heat exchanger 44, and is then fed from the upper part of regeneration tower 45. Absorbent liquid RAB is then heated by coming into contact with the hot gas arising from the lower part, while falling toward the lower part, thereby emitting the absorbed CO₂. Re-boiler 46 is installed on the bottom part of regeneration tower 45, which heats the absorbent liquid with a heat medium HM. CO₂ and vapor flow from the bottom part toward the upper part of the regeneration tower, and, finally CO₂ gas CO₂G is collected from the top. After emitting CO₂, absorbent liquid LAB is pressurized by pump 47, cooled by heat exchanger 44 and cooler 48, and once again supplied from the upper part of the absorption tower.
By using the above-described CO₂ separation recovery apparatus, CO₂ contained in combustion fuel gas can be separated and collected, but energy consumption such as a heat source for the re-boiler and power for the pump is large, and the facility cost is also expensive.

Moreover, prior art such as patent documents 1 and 2, related to the present invention, have already been disclosed.

Fig. 1 is Fig. 3 disclosed in patent document 1. This diagram indicates that by utilizing the fact that combustion of the flammable component in the anode exhaust of solid oxide form fuel cell under oxygen, converts the combustion gas to CO₂ and H₂O, cooling and separating H₂O, CO₂ can be easily recovered. Therefore, that CO₂ is recoverable by cooling the anode exhaust of a fuel cell after combustion under oxygen and separating moisture, has already been disclosed by patent document 1.

On the other hand, it is a simple principle of chemistry that theoretically, combustion of all hydrocarbons under oxygen produces CO₂ and H₂O. A fuel cell is, in short, the oxidation process of fuel gas, and anode exhaust is fuel gas in the state of partial oxidation. If the fuel gas supplied to a fuel cell is a hydrocarbon fuel or a fuel gas obtained from it, the anode exhaust is a partial oxidation product of the hydrocarbon fuel. By combusting under oxygen and cooling to remove water, CO₂ can be recovered.

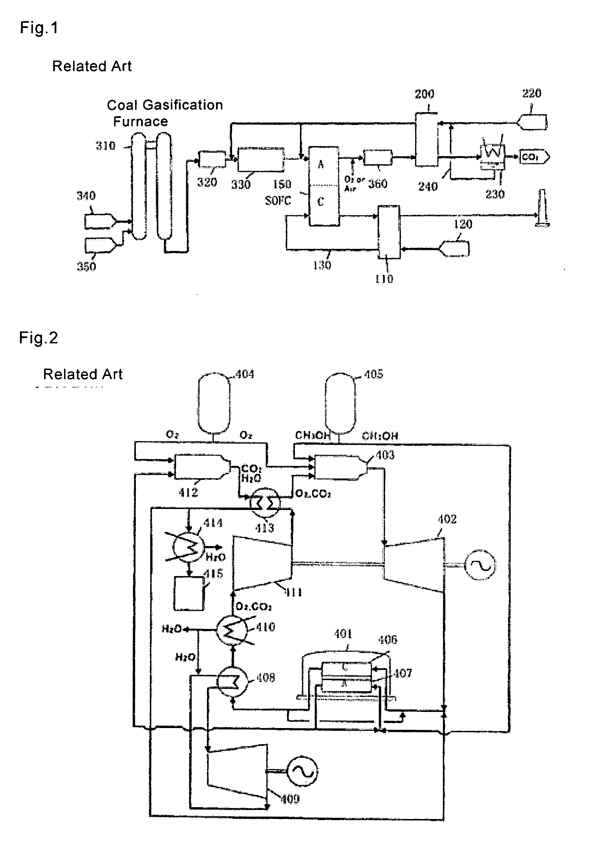

In the case of Fig. 1, SOFC is used as a fuel cell. Since the electrolyte in SOFC has oxygen ion conductivity, oxygen alone migrates to the fuel pole (anode), even if air is supplied to the air pole (cathode), and reacts with hydrogen to generate electricity; thus, N₂ is never mixed into the anode exhaust. Therefore, since air and not just oxygen can be supplied to the cathode, oxygen is only necessary for combusting the anode exhaust under oxygen; thus the amount of oxygen consumption can be decreased. However, even in phosphoric acid form fuel cells (PAFC) and polymer electrolyte fuel cells (PEFC) that have hydrogen ion conductivity, nitrogen is not mixed in the anode exhaust when air is supplied to the cathode, and by combustion of the anode exhaust under oxygen, CO₂ and H₂O is generated, and CO₂ is collected by cooling and removing moisture.

That is, in the case of Fig. 1, SOFC is used as a fuel cell, preheating air 130 obtained by preheating air 120 using air preheater 110 is supplied to the cathode, and the heat source for the air preheater is the cathode exhaust. Further, as fuel, coal 340 and oxygen 350 is gasified in a coal gasification furnace 310 to obtain a gas, which is then desulfurized in a desulfurizer 320, passed through a methanol synthesis catalyst layer 330, meanwhile leading steam at its entrance and outlet; the gas exiting the catalyst layer is fed to anode A. The fuel gas fed causes an internal reforming reaction within the fuel cell, and power generation reaction occurs by the H₂ and CO produced. External oxygen is supplied to the resulting gas discharged from anode A, which is then led to burner 360; the combustion gas is further led to a heat exchanger 200, whereby water 220 is evaporated, which steam is used as a fuel reforming steam. Furthermore, the combustion gas cooled by heat exchanger 200 is subsequently led to a cooler 230, whereby water is separated, and the remaining gas is collected as CO₂. Moreover, the collected water is used in order to generate steam.

In the above-mentioned patent document 1, the fuel cell is limited to SOFC in the scope, and MCFC is not mentioned at all. The reason may be that the power generation principles differ and the same process is not applicable to MCFC.

On the other hand, Fig. 2 is equivalent to Fig. 14 disclosed in patent document 2, and is a hybrid system of MCFC, a gas turbine, and a steam turbine. The system uses oxygen as the oxidizer instead of air to enabled CO₂ recovery.

The fuel cell of this system is MCFC, and methanol is supplied to the anode 407 from a tank, mixed with the recycled anode exhaust, and supplied to the anode. Moreover, a combustion gas obtained by combusting anode exhaust under oxygen and a gas turbine exhaust are mixed and supplied to the cathode 406. The cathode exhaust is led to a steam generator 408, and after generating steam, is led to a cooler 410, whereby moisture is separated. The steam generated by the steam generator is led to a steam turbine 409, and drives the steam turbine to generate electricity. Further, the cathode exhaust from which moisture was separated by the cooler 410, i.e., mixed gas of CO₂ and O₂, is led to a compressor 411 of the gas turbine, and the compressed gas is heated by the heat exchanger 413, and led to a burner 403. Methanol and oxygen are supplied to the burner 403, and the combustion gas is supplied to the gas turbine, and work is generated during the process of expansion inside the gas turbine, thereby generating electricity. Exhaust from the gas turbine is supplied to the cathode. On the other hand, the anode exhaust is led to a burner 412, into which oxygen is supplied, and the combustible component in the anode exhaust is combusted. After this combustion gas gives heat to compressed gas in the heat exchanger 413, it is separated into two lines: in one line, moisture is separated by a cooler 414 and CO₂ gas is collected; the other line is supplied to the cathode.

### Related Art Documents

### Patent documents

Patent document 1: JP-A-H04-000108, "COMBUSTION DEVICE"
Patent document 2: JP-A-H11-026004, "POWER GENERATING SYSTEM"

The system disclosed in patent document 2 is a combination of MCFC and gas turbine and is extremely complicated, difficult to operate and control since the subsystems affect each other, thus, making it impossible to freely change the composition of cathode gas.
Hereinafter, problems that are not solved by the system disclosed in patent document 2 are described in detail.

(1) The power generation reaction of MCFC is as follows. About half of the reaction heat from hydrogen in transformed to electricity, and the remainder turns to heat.
   Cathode reaction: CO₂+1/2O₂+2e⁻-> CO₃2⁻
   Anode reaction: H₂+CO₃²- -> H₂O + CO₂ + 2e⁻
   Whole reaction : H₂+1/2O₂-> H₂O
Therefore, cooling of heat generated during power generation reaction is necessary for this fuel cell; for an external reforming type MCFC, sensible heat from cathode gas and anode gas is used for cooling, and for an internal reforming type, in addition to the sensible heat of cathode gas and anode gas, reforming reaction is also used for cooling.
Therefore, the flow rate of the gas which flows through the cathode and the temperature at the inlet and an outlet are decided by the heat balance of the fuel cell. Exhaust from gas turbine is supplied to the cathode, and the cathode exhaust is fed to a compressor in the gas turbine after separating moisture, methanol and oxygen are added and the combustion gas is fed to the gas turbine. That is, cathode and a gas turbine act as one and cannot be freely adjusted individually. It is quite difficult to control the rate of gas flow at the cathode and the temperature at the inlet and outlet so as to maintain heat balance.

On the other hand, the same amount of CO₂ and O₂ as those consumed in the power generation reaction at the cathode must be externally-supplied. Although CO₂ is supplied from methanol and by recycling exhaust obtained from combustion of anode exhaust under oxygen, the amount supplied by such means must be in exact agreement with the amount consumed in the power generation reaction. Since the quantity of methanol and oxygen determines the temperature at the inlet, while also determining CO₂ balance, it is quite difficult to satisfy this condition.

Furthermore, since there is no purge line in the cathode gas circulation system, the quantity of CO₂ generated from methanol cannot exceed the amount of power generation reactions, oxygen cannot be fed in a quantity above that consumed in the power generation reaction, and the total amount of CO₂ and O₂ that is fed from the combustion gas of anode exhaust, and the total amount of CO₂ and O₂ that is fed from the methanol and O₂ burner must be in exact agreement with the quantity of those consumed by the power generation reaction.

On the other hand, since the temperature at the outlet of the gas turbine, i.e. the cathode entrance, is determined by the inlet temperature, which is decided by the combustion of methanol, there is a factor, aside from CO₂ balance, that determines the flow rate of methanol. Thus, the fuel cell and gas turbine can only be operated simultaneously under conditions that satisfy these conditions.

Furthermore, if for example, power generation load were to be decrease from 100% to 50% of its rated value, heat generation by the fuel cell decreases to less than half, and if the inlet and outlet temperatures of the cathode were to be fixed, then the flow rate to the gas turbine must be controlled to less than half. Moreover, since the pressure ratio of the gas turbine also changes with the change in flow rate, in order to maintain the cathode inlet temperature uniformly, the amount of methanol, in other words, combustion temperature must be changed depending on the flow rate. On the other hand, since the amount of CO₂ consumed by the power generation reaction becomes less than half, the amount of methanol must also become less than half.

As has been described, it is very difficult to operate both gas turbine and fuel cell simultaneously, and further change its load freely, while maintaining circulation rate of cathode gas, the cathode inlet and outlet temperatures, and CO₂ balance, which determines the heat balance of fuel cell.

(2) Moreover, when using oxygen as an oxidizer at the cathode, not only is it possible to recover CO₂, but by heightening the partial pressure of CO₂ and O₂ at the cathode, voltage of the fuel cell can be increased, which results in increased output of the fuel cell, and improvement of power generation efficiency. Such merit must be used to advantage. However, on the other hand, in MCFC, there is a problem of nickel short-circuit, and increasing CO₂ partial pressure at the cathode shortens the life of a fuel cell.

Nickel short-circuit is a fatal problem for a fuel cell, which occurs when nickel oxide constituting the cathode dissolves into the electrolyte as ions (NiO + CO₂ -> Ni²⁺ + CO₃²-), which are then reduced by hydrogen and deposited in the electrolyte plate as metal nickel (Ni²⁺ + H₂ + CO₃²⁻ -> Ni + H₂O + CO₂), and increase in nickel deposition causes conduction between anode and cathode of the electrolyte plate, which should be insulated.
In order to increase voltage of the fuel cell while preventing such nickel short-circuit, gas composition at the cathode should be freely controllable; however, in the system disclosed in Fig. 2, it is virtually impossible to change the CO₂ and O₂ concentrations at the cathode freely, while satisfying heat balance and CO₂ balance of the fuel cell.

(3) Moreover, although methanol is supplied to the anode as fuel, steam, which is required for reforming, is not externally-supplied, but is provided by recycling of the anode exhaust. Since the anode exhaust contains a large amount of CO₂ in addition to H₂O, and CO₂ is also recycled, the hydrogen partial pressure at the anode decreases, leading to a decrease in voltage of the fuel cell, and decrease in power generation efficiency. Furthermore, in this system, methanol fuel must be supplied not only for MCFC, but for the gas turbine, as well, and in comparison to a system with the highest power generation efficiency, where fuel is only supplied for the MCFC, power generation efficiency becomes low.

Although there is no description in particular for the system indicated in Fig. 2, an oxygen plant is required in order to supply oxygen, and the quantity of oxygen consumption is that necessary for the combustion of both methanol for the fuel cell and methanol for the gas turbine, thus leading to much larger consumption power, which then becomes a major factor in decreasing its power generation efficiency.
Although the use of oxygen can be a factor in increasing power generation efficiency in MCFC, since a gas turbine is decided by the flow rate, the entrance temperature, and the pressure ratio that flows through the gas turbine, there is no particular advantage in using oxygen, and the consumption power for the oxygen plant corresponding to the gas turbine becomes a factor that decreases power generation efficiency.

(4) Moreover, in the system disclosed in Fig. 2, heat is not recovered; the system's aim seems to be to convert as much energy that fuel holds to electricity, and the system seems to be intended for use in large-scale business power generation facilities, and is thus not suitable for middle-to-small-size dispersed power source, which requires both heat and electric power.
Furthermore, change of load is also required in a dispersed power source, and the rate of heat and electricity needed is not constant, and so-called thermoelectric variable operation is also required. However, in Fig. 2, the entire system is integrated, and lacks system flexibility for load change, thermoelectric variable operation, and adjustment of cathode gas composition, etc.

### Summary of the Invention

### Technical Problem to be Solved by the Invention

The present invention has been originated in order to solve the above-mentioned conventional problems. That is, the purpose of the present invention is to provide an MCFC power generation system, which minimizes the facility added to usual power generation facilities, drastically reduces or eliminates atmosphere discharge of CO₂ while simultaneously acquiring high power generation efficiency and heat recollection efficiency, and method of operating the same. Furthermore, the purpose of the present invention is to provide a MCFC power generation system, which enables adjustment of voltage and output of fuel cell within a certain range by adjusting cathode gas composition, enables drastic change in the ratio of heat and electricity, and enables the so-called thermoelectric variable operation, and method of operating the same.

### Means to Solve the Problem

According to the present invention, a MCFC power generation system comprising a fuel gas supply system for supplying fuel gas to a molten carbonate type fuel cell is provided, wherein said fuel gas supply system comprises: a fuel heater that connects to an anode outlet; two lines that divide anode exhaust from said fuel heater, of which one line is connected to an anode exhaust circulation blower, mixing outlet gas from said blower with fuel gas externally supplied to said fuel cell, then mixing with steam for reforming, and leading to catalyst layer in a pre-converter, whereby pretreatment of mixed gas is performed, followed by heating with a fuel heater, and supplying to said fuel cell.

According to a desirable embodiment of the present invention, amount of anode recycling is controlled so that the mixed temperature of the outlet gas from the anode exhaust circulation blower, the externally-supplied fuel gas, and the steam for reforming, is in the range of 250 to 400 °C, thereby obtaining high methane concentration in pre-converter outlet gas.

Moreover, according to the present invention, a MCFC power generation system comprising a cathode gas circulation system for circulating cathode gas of a molten carbonate type fuel cell is provided, wherein said cathode gas circulation system comprises: a closed circulation loop, comprising a cathode gas circulation blower whose intake side connects to a cathode outlet and discharge side connects to a cathode inlet, wherein the cathode outlet side is separated in to two lines, one of which is connected to a purge line comprising a flow rate regulation valve, and the other line is connected to a check valve, and further, downstream to said check valve, there is connected an oxygen supplying line and a CO₂ supplying line, each of which comprise a control valve.

According to a desirable embodiment of the present invention, by building a heat exchanger with temperature control function for controlling temperature of CO₂ supply to the CO₂ supply line, cathode inlet temperature can be controlled by simply supplying and mixing oxygen and CO₂ to the cathode outlet gas which passes through the check valve.

Moreover, according to the present invention, a MCFC power generation system comprising an energy recovery system for recovering energy from anode exhaust of a molten carbonate type fuel cell is provided, wherein said energy recovery system: leads at least part of anode exhaust to a mixer, wherein said mixer comprises an oxygen supply line and a combustion gas recycle line; and mixed gas from the mixer outlet is led to a catalytic oxidizer, wherein combustible composition in said anode exhaust is combusted under oxygen; and combustion gas exiting said catalytic oxidizer first heats compressed air for a gas turbine that utilizes air as a working medium, then heats recycled CO₂, and is led to an exhaust heat recovery boiler, thereby producing steam; and combustion gas exiting the evaporation side of the exhaust heat recovery boiler is separated into two lines, of which one is connected to a combustion gas recycling blower to recycle cooled combustion gas to the mixer, and the other line feeds to a water supply heater of the exhaust heat recycling boiler.

According to a desirable embodiment of the present invention, said system comprises a gas turbine that utilizes air as its operation medium, which receives heat from high temperature combustion gas from said catalytic oxidizer through an air heater, and air, which is the above-mentioned operation medium is independent and does not mix with any other fluids.

Moreover, as a means to collect heat energy from turbine exhaust, said system is constructed so that compressed air is first heated by a regenerated heat exchanger, and steam is produced by an exhaust heat recovery boiler, subsequently; and at the exhaust heat recovery boiler, temperature of regenerated heat exchanger outlet is controlled so as to enable constant production of steam necessary for reforming.

Moreover, rotation frequency of the combustion gas recycling blower is controlled so as to maintain a constant preset temperature at the outlet of the catalyst oxidization chamber.

Further, said system comprises a damper that enables switching of position of recycling combustion gas from a low temperature part to a high temperature part.

Moreover, according to the present invention, a method for operating the above-described MCFC power generation system is provided, wherein the amount of combustion gas passing through an air heater is increased by switching position of recycling combustion gas from a low temperature part to a high temperature part, thereby increasing gas turbine output by increasing amount of heat provided to compressed air, while, conversely decreasing amount of steam production at the exhaust heat recovery boiler.

Furthermore, according to the present invention, a method for operating the above-described MCFC power generation system is provided, wherein circulation flow rate of the combustion gas recycling blower is gradually increased by gradually reducing the set value for the outlet temperature of the catalytic oxidizer, thereby decreasing the outlet temperature of the catalytic oxidizer, and decreasing the amount of heat provided to the compressed air through the air heater, thereby decreasing output of gas turbine, and conversely increasing the amount of steam production at the exhaust heat recovery boiler.

According to a desirable embodiment of the present invention, the amount of steam production by the exhaust heat recovery boiler is at a maximum when the supply of steam for reforming is switched from the exhaust heat recovery boiler at the gas turbine side to that at the combustion gas side while gas turbine output is near zero, and then the gas turbine is turned off.

Moreover, according to the present invention, a method for operating the above-described MCFC power generation system is provided, wherein voltage of the fuel cell is maintained at a near constant throughout its life, by increasing the concentration of CO₂ and O₂ in the cathode circulation system in an amount that corresponds to voltage degradation, in correspondence with time-dependent voltage degradation of fuel cell.

### Effect of Invention

(1) According to the composition of the above-described present invention, the system comprises a cathode gas circulation system, wherein cathode gas is circulated by a cathode gas circulation blower and forms a closed loop; oxygen consumed by the power generation reaction is supplied by the oxygen supplying plant, and CO₂ is supplied by recycled CO₂, and thus, the necessary amount and composition of cathode circulation gas is maintained, and there is basically no exhaust from the cathode circulation system. Therefore, it may be said that the present power generation facility is a power generation facility with substantially no, or minimized, atmospheric release of CO₂.

(2) On the other hand, since only CO₂ remains by combusting combustible components in the anode exhaust under oxygen, cooling and removing water, part of such CO₂ is recycled to the cathode, while the remainder is mostly collected as high concentration CO₂ gas, there is virtually no atmospheric release of CO₂ from the anode.

(3) Moreover, by recycling fuel gas in the anode exhaust, the amount of fuel gas externally-supplied can be reduced.
Also, in the present invention, by mixing with part of the high-temperature exhaust, the temperature of fuel gas and reforming steam can be raised to a temperature close to the working temperature of the pre-converter, thus the need for a fuel humidifier is eliminated.
Furthermore, since anode exhaust contains steam generated in the power generation reaction at the anode, the quantity of reforming steam to be freshly supplied is significantly reduced.

(4) Moreover, since the amount of reforming steam supplied can be reduced significantly, reforming steam supply can be fully provided simply by generating low-pressure steam from turbine exhaust exiting the low-temperature regeneration heat exchanger.
On the other hand, in the combustion gas system wherein the anode exhaust is combusted under oxygen, since fuel humidifier conventionally needed is made unnecessary, all excessive heat can be applied to the generation of high-pressure steam, and the amount of recycled steam significantly increases, thereby significantly increasing the comprehensive thermal efficiency.

(5) Furthermore, the MCFC of the present invention is of an internal reforming type; thus, by mixing part of the anode exhaust with fuel gas such as urban gas externally-supplied, adding reforming steam and passing through one reforming catalyst layer, reforming reaction and methanation reaction progress simultaneously; since an endothermic reaction and an exothermic reaction progress simultaneously, thermal change is mutually absorbed, making it easy to control reaction temperature to that desired.

(6) The medium for the gas turbine is air and its exhaust does not pollute the atmosphere. Moreover, variable heat and power operation is enabled since although electric output increases while the gas turbine is in operation, exhaust heat recovery becomes large when turned off.
(7) When oxygen instead of air is supplied to the cathode of MCFC as an oxidizer, not only is it possible to recover CO₂, but the voltage of fuel cell can be increased by increasing the CO₂ and O₂ concentration at the cathode. Thus, fuel cell output is increased and power generation efficiency can be raised.

### Brief Description of Drawings

[Fig. 1] is a configuration diagram of the power generation system disclosed in patent document 1.
[Fig. 2] is a configuration diagram of the power generation system disclosed in patent document 2.
[Fig. 3] is a configuration diagram of a conventional MCFC power generation system.
[Fig. 4] is a configuration diagram of an apparatus for separation and recovery of CO₂ from combustion exhaust.
[Fig. 5] is a configuration diagram of the MCFC power generation system of the present invention.
[Fig. 6] is a detailed drawing of the cathode gas circulation system of Fig. 5.
[Fig. 7] is a detailed drawing of the fuel gas supply system of Fig. 5.
[Fig. 8] is a detailed drawing of the energy recovery system of Fig. 5.
[Fig. 9] is a diagram that shows the relationship of the amount of combustion gas recycled, the entrance temperature of a gas turbine, and output.
[Fig. 10] shows data for voltage fixed operation.

### Description of Embodiments

Hereinafter, favorable examples of embodiments of the present invention are described with reference to the accompanying drawings. The same or corresponding portions are denoted by the same reference numerals, and overlapping descriptions are omitted.

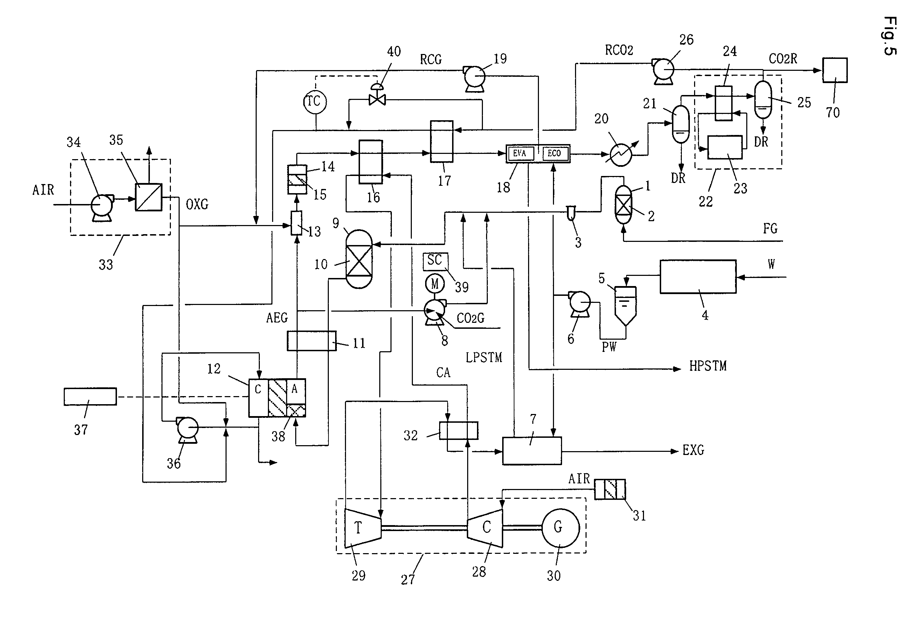

Fig. 5 is a configuration diagram of the entire MCFC power generation system of the present invention.
Although fuel gas FG, such as urban gas, externally-supplied, is desulfurized by a desulfurization agent 2 in a desulfurization facility 1 and supplied to a pre-converter 9 via a filter 3, part of the anode exhaust is mixed in at a high temperature along the way. Subsequently, steam for reforming is mixed in an amount matching that of the externally-supplied fuel gas such as urban gas, and components heavier that ethane in the externally-supplied fuel gas such as urban gas is reformed in the course of passing through a reforming catalyst layer 10 in the pre-converter, while at the same time, H₂, CO, and CO₂ in the recycled anode exhaust conversely initiate methanation reaction.

The order by which externally-supplied fuel gas such as urban gas, part of the anode exhaust, and steam for reforming are mixed, may be as indicated in Fig. 5, or preferably, for preventing drain generation, urban gas may be added after mixing part of the anode exhaust with steam for reforming; although the site at which mixing occurs is indicated as a piping in Fig. 5, methods such as mixing with a mixer built between the piping and mixing inside the pre-converter may also be applied, and Fig. 5 merely shows one example among such methods.

Gas exiting the pre-converter is led to a fuel heater 11, is heated by anode exhaust to a temperature slightly lower than the working temperature of the fuel cell, and is supplied to the fuel cell 12. The fuel cell is an internal reforming type MCFC, wherein reformer 38 is built inside the fuel cell, and fuel gas is reformed inside the fuel cell to generate H₂ and CO, which become fuel for MCFC.

About 70% of H₂+CO generated by the conventional MCFC-gas turbine hybrid system of Fig. 3 is consumed by the power generation reaction (H₂+CO₃²⁻ -> H₂O+CO₂+2e⁻), while the remainder becomes anode exhaust and its combustible component is combusted; however, in the present invention, because part of the anode exhaust is recycled, utilization ratio of fuel is increased up to 80%, thereby reduces the amount of externally-supplied fuel gas such as urban gas and amount of steam for reforming supplied.

At any rate, part of H₂ and CO in fuel gas is consumed in the power generation reaction, and the remainder is discharged from the fuel cell as anode exhaust. In a fuel cell, since a direct current is generated, electricity is delivered after converting to alternate current by an inverter 37.
After the anode exhaust provides heat to the pre-converter outlet gas at the fuel heater 11, part of the exhaust is pressurized by an anode exhaust circulation blower 8, and mixed with externally-supplied fuel gas such as urban gas. The remainder is mixed with oxygen and recycled combustion gas RCG by a mixer 13, and led to a catalytic combustor 14.
The catalytic combustor 14 comprises a combustion catalyst layer 15, which combusts the combustible component in the anode exhaust. The combustion gas exiting the catalytic combustor 14 is led to a high temperature heat exchanger 16, and heats the compressed air CA to a turbine inlet temperature. Subsequently, heat is provided to RCO₂, which is recycled CO₂, with a CO₂ heater 17, and the gas is led to an exhaust heat recovery boiler 18. The exhaust heat recovery boiler 18 comprises an evaporation part EVA and a feed-water heating part ECO, and although the heat source is the same combustion gas, since the recycled combustion gas RCG branches from the outlet of the evaporation part of the exhaust heat recovery boiler 18, the flows rate of the combustion gas differ between the evaporation part and a feed-water heating part.

Meanwhile, although the position at which combustion gas is recycled is indicated as the outlet of the evaporation part of the exhaust heat recovery boiler in Fig. 5, it may also be positioned at the outlet of the CO₂ heater 17 or the outlet of the high temperature heat exchanger 16; although power generation efficiency becomes higher as the position of recycling becomes higher in temperature, exhaust heat recovery efficiency decreases, and has both features.

The recycled combustion gas is pressurized by a combustion gas recycling blower 19, and sent to a mixer 13. Although Fig. 5 indicated that mixing occurs in the oxygen line, the mixing of anode exhaust, oxygen and recycled combustion gas, may be performed by a method that uses mixer 13, and other such methods, and Fig. 5 is not intended to specify a method.

The combustion gas exiting the feed-water heating part of the exhaust heat recovery boiler 18 is cooled by a cooler 20, and condensed water is separated by a KO drum 21. Although the gas exiting the KO drum 21 is substantially CO₂ gas, if necessary, it may further be led to a dehumidification system 22, which decreases temperature to remove moisture. The dehumidification system 22 comprises a freezer 23, a heat exchanger 24, and a KO drum 25.
As for the CO₂ gas exiting the KO drum 25, CO₂ concentration is raised to about 95%. Part of it is pressurized by a CO₂ recycling blower 26, and after being preheated with a CO₂ warmer 17, is supplied to the cathode gas circulation system. The remaining CO₂ gas is recovered by the high concentration CO₂ recovery apparatus 70 in high concentration, and discharge to the atmosphere is mostly lost.

On the other hand, the cathode gas circulation system forms a closed cycle in which circulation is induced by a cathode gas circulating blower 36, and oxygen consumed by the power generation reaction (CO₂ + 1/2O₂ +2e⁻ -> CO₃2⁻) of the cathode is supplied by an oxygen supply plant 33. Although the oxygen supply plant 33 is indicated in Fig 5 as being composed of an air compressor 34 and a separator 35, various systems, such as PSA (Pressure Swing Adsorber) and liquefaction separation are known for oxygen supply plant, and the present invention does not limit the specifics of the oxygen supply plant.

On the other hand, with regard to the CO₂ consumed by the power generation reaction, as has been previously described, recycled CO₂, obtained by combustion of anode exhaust under oxygen, is supplied to the cathode gas circulation system after being cooled and dehumidified. The temperature of cathode gas is higher at the outlet than at the inlet, due to heat generation accompanying the power generation reaction in the fuel cell, but may be adjusted to a temperature close to that of the inlet temperature by mixing oxygen near normal temperature with recycled CO₂ preheated to 250-450 °C. Such temperature control is performed by controlling the outlet temperature of CO₂ heater 17.

The basic structure of the MCFC power generation facility part of the present invention, the present invention additionally comprises a gas turbine generator, which utilizes air as its operation medium.

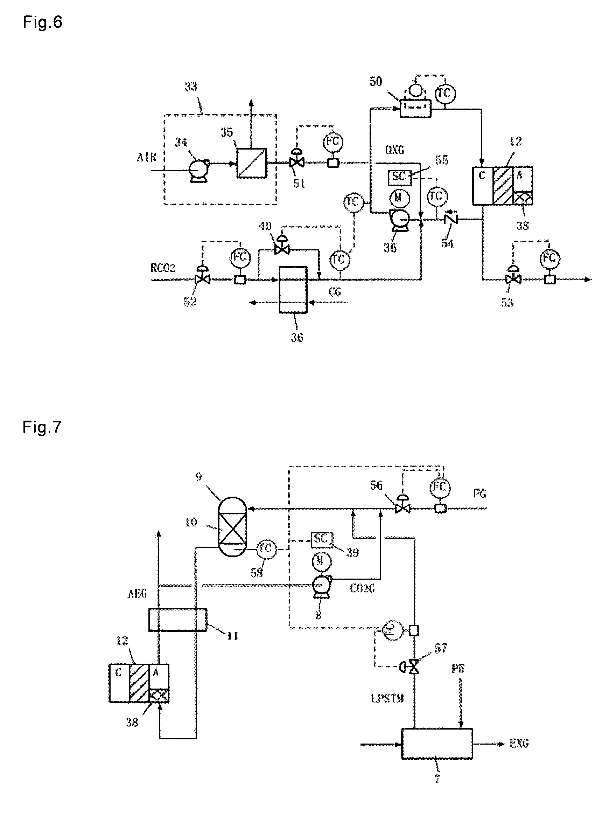

Air is led to a compressor 28 in a gas turbine generator 27 via a filter 31, and the compressed air CA is first heated by the exhaust from a turbine 29 in a regeneration heat exchanger 32, followed by heat exchanging with combustion gas CG of anode exhaust in the high temperature heat exchanger 16, whereby the compressed air heated to turbine inlet temperature is led to the turbine 29. Works takes place in the process of expanding to a pressure near atmospheric pressure in the turbine 29, and is extracted as alternating current output by an electric generator 30. Furthermore, the turbine exhaust is led to the regeneration heat exchanger 32, where it provides heat to compressed air, and subsequently to an exhaust heat recovery boiler 7. At the exhaust heat recovery boiler 7, low-pressure steam required for reforming is generated, and the turbine exhaust exiting the exhaust heat recovery boiler is emitted to the atmosphere.
Although the basic structure of the present invention is as described above, hereinafter, details on the constituents, use and effect, etc. of each subsystem will be further described with reference to Fig. 6 - Fig. 10.

The above-described MCFC power generation system of the present invention produces the following effects.

(1) Cathode gas is circulated by the cathode gas circulation blower, and forms a closed loop. Since the oxygen consumed by the power generation reaction (CO₂ + 1/2O₂ +2e⁻ -> CO₃²⁻) is supplied from an oxygen supply plant and CO₂ is supplied by recycled CO₂, the required quantity and composition of the cathode circulating gas is maintained, and there is basically no exhaust from the cathode gas circulation system. However, a certain amount of purging would be needed if the oxygen and CO₂ supplied contain impurities. But, since the nitrogen content of oxygen and the H₂O content of CO₂ are slight, and part of such CO₂ is recycled to the cathode while the remainder is mostly collected as high concentration CO₂ gas, atmospheric discharge of CO₂ from an anode is virtually lost.

(2) On the other hand, the carbonic acid ion (CO₃²⁻) generated at the cathode diffuses to the anode, and CO₂ is generated by the power generation reaction (CO₂ + 1/2O₂ +2e⁻ -> CO₃²-) at the anode. Although anode exhaust contain CH₄, H₂, CO, CO₂, and H₂O, these are converted to CO₂ and H₂O by combusting the combustible component under oxygen, and by cooling and water removal, only CO₂ will remain. However, when oxygen contains nitrogen, a small amount of nitrogen is mixed in CO₂, and when excessive oxygen is introduced, a small amount of oxygen may also be mixed. Furthermore, since CO₂ is cannot be completely removed by cooling and water removal, a small amount of nitrogen, oxygen, and vapor will be contained in CO₂, but such impurities do not cause harm either at recycling or collection. Since a part of such CO₂ is collected and the remainder is recycled to the cathode, atmospheric discharge of CO₂ from the anode is zero.

(3) Moreover, in the conventional system of Fig. 3, the anode exhaust contains about 30% of remaining fuel gas, and by combusting its entirety under air and using its heat as a heat source for the gas turbine for the purpose of power recovery, the overall power generation efficiency was improved.
In the present invention, fuel gas in the anode exhaust is recycled by recycling part of the anode exhaust and mixing with externally-supplied fuel gas, such as urban gas, and steam for reforming; thus, the amount of fuel gas to be supplied externally is reduced.
Moreover, although a fuel humidifier was needed in the conventional system of Fig. 3 for preheating externally-supplied fuel gas, such as urban gas, and for generating and preheating steam for reforming, the present invention does not require one, since the temperature of fuel gas and steam are raised to working temperature of the pre-converter by mixing with part of the hot anode exhaust.
Furthermore, since the anode exhaust contains steam generated by the power generation reaction at the anode, the quantity of steam for reforming that is freshly supplied can be significantly reduced. Also, that the amount of externally-supplied fuel gas, such as urban gas, is reduced is a factor for reducing the amount of steam for reforming.

(4) When considering a case where part of the anode exhaust is not recycled in the present invention shown in Fig.5, the temperature of the turbine exhaust exiting the low-temperature regeneration heat exchanger becomes low, and cannot be effectively utilized as a heat source; however, since the amount of steam for reforming that is supplied is significantly reduced by recycling part of the anode exhaust, when low-pressure vapor is generated from the turbine exhaust exiting the low-temperature regeneration heat exchanger, all necessary steam can be covered.
On the other hand, in the combustion gas system, wherein anode exhaust is combusted with oxygen, because a fuel humidifier that was conventionally needed is now unnecessary, all excessive heat can be used for the generation of high-pressure steam, and the amount of recycled steam increases significantly. Since this high-pressure vapor may be used outside the system of the present invention shown in Fig. 5, the total thermal efficiency is significantly increased.

(5) Moreover, the MCFC of the present invention is an internal reforming type, and uses the reforming reaction (CH₄ + H₂O -> CO + 3H₂), which is an endothermic reaction, to cool the fuel cell. Therefore, it is desirable that the methane concentration in the fuel gas supplied to the fuel cell is high. However, the main components in the anode exhaust are H₂, CO, CO₂, and H₂O, and methane is virtually non-existent. Therefore, it is necessary to promote a methanation reaction (CO₂ + 4H₂ -> CH₄ + 2H₂O), which is the reverse reaction of reforming reaction.
Although these reactions can be attained using the same reforming catalyst by adjusting temperature with the same reforming catalyst, methanation reaction is an exothermic reaction, and methanation of part of the anode exhaust alone cause excessive increase in temperature, which not only inhibits the increase of methane concentration due to equilibrium, but causes degradation of the catalyst. On the other hand, externally-supplied fuel gas, such as urban gas, contains ethane, propane, butane, etc. along with methane, that when reforming temperature is low, reforming of most components heavier than ethane proceeds, but reforming of methane hardly proceeds. Since reforming reaction is an endothermic reaction, in order for it to proceed on its own, preheating is necessary.

Therefore, the reforming reaction and methanation reaction can proceed simultaneously by mixing part of the anode gas with externally-supplied fuel gas, such as urban gas, adding steam for reforming, and passing through one reforming catalytic layer; since an endothermic and exothermic reaction proceed simultaneously, temperature change is mutually mitigated, and maintaining the reaction temperature to that intended becomes easy. Operations, such as preheating of gas and cooling of a reaction machine, are unnecessary in this process.
In addition, since externally-supplied fuel gas, such as urban gas, is at normal temperature, drain will occur if saturated steam is mixed; therefore, to prevent generation of drain at mixing, steam should be mixed after mixing part of the hot anode exhaust with fuel gas, or fuel gas should be mixed after mixing part of the hot anode exhaust with steam.

(6) The medium of the gas turbine is air and its exhaust does not pollute the atmosphere, and since heat is only received from the MCFC power generation system via the heat exchanger, operation of the MCFC power generation system can be continued even when the gas turbine is turned off. Therefore, the electric output increases while the gas turbine is in operation, and exhaust heat recovery increases when it is stopped, thereby enabling a variable heat and power operation. By increasing the amount of recycling of combustion gas and decreasing the temperature of the catalytic oxidizer outlet, the quantity of heat exchange at the high temperature heat exchanger is decreased, and the output of the gas turbine is reduced while the amount of steam generation in the exhaust heat recovery boiler is increased, and the final form is the shut-down of the gas turbine. Detailed descriptions are given in the example section.

(7) When supplying oxygen as an oxidizer for the MCFC cathode, instead of air, not only can CO₂ be recovered, but the voltage of the fuel cell can be raised by increasing the CO₂ and O₂ concentration at the cathode. This, in turn increases the output of the fuel cell and enhance power generation efficiency.
However, on the other hand, problems such as nickel short circuit, and shortening of cell life by increased cathode CO₂ partial pressure exist in MCFC. Nickel short-circuit is a fatal problem for a fuel cell, which occurs when nickel oxide constituting the cathode dissolves into the electrolyte as ions (NiO + CO₂ -> Ni²⁺ + CO₃²⁻), which are then reduced by hydrogen and deposited as metal nickel in the electrolyte plate (Ni²⁺ + H₂ + CO₃²⁻ -> Ni + H₂O + CO₂), and increase in nickel deposition causes conduction between anode and cathode of the electrolyte plate, which should be insulated.
In order to increase the voltage of the fuel cell while preventing such problems, the gas composition of the cathode should be freely controllable; the cathode gas circulation system of the present invention is a closed loop completely independent of other subsystems, so that the gas composition of the cathode can be freely adjusted without the change in gas composition affecting other subsystems.
When the voltage of the fuel cell becomes high, heat generation in the fuel cell decreases, and the necessity to cool the fuel cell will decrease in accordance; however, since the amount of cathode gas circulation can be easily fluctuated by changing the rotation frequency of the blower, that even with the heat balance of the fuel cell in mind, the CO₂ and O₂ concentration in the cathode gas can be adjusted easily and accurately, while taking nickel short circuit into consideration. Detailed descriptions are given in the example section.

### Example 1

Fig. 6 describes the cathode gas circulation system part of Fig. 5 in further detail.
It is necessary to supply CO₂ and O₂ which are consumed by the power generation reaction (CO₂ + 1/2O₂ +2e⁻ -> CO₃²⁻) at the cathode, and purged. The reaction amount may be calculated from the direct-current of the fuel cell, and the purged amount may be checked by flow control valve 53. O₂ from the oxygen plant established in the exterior of the MCFC power generation plant, is controlled by the flow control valve 51, and is supplied at a temperature near normal temperature. CO₂ is supplied to the cathode gas circulation system by controlling the flow rate of recycled CO₂ (RCO₂), obtained by combustion of anode exhaust under oxygen, cooling, and water-extraction, with a flow control valve 52, and by controlling the temperature with a temperature control valve 40 built in a CO₂ heater 36. Since the temperature of the gas passing through the cathode is higher at the outlet than the inlet due to heat generated by the power generation reaction, the temperature is controlled to recover the inlet temperature by supplying and mixing CO₂ and O₂. The temperature of recycled CO₂ is adjusted by a CO₂ heater so that the temperature of the mixed gas after adiabatic compression by the cathode gas circulation blower matches the cathode inlet temperature. The circulation volume of the cathode gas circulation blower is controlled so that the cathode outlet gas temperature is kept constant.

On the other hand, since both CO₂ and O₂ supplied contain impure gas, purging is necessary; hence, the cathode outlet of the cathode circulation system is divided into two lines, of which one is connected to a purge line that is equipped with a flow control valve 53, and the other is equipped with a check valve 54 and connects the supply line of CO₂ and O₂ downstream of the check valve 54.
The cathode gas circulation system of the present invention enables free change of the gas composition, as well as free fluctuation of the amount of circulation depending on the degree of heat generation in the fuel cell. Moreover, such changes do not affect other subsystems.

Plant performance when the cathode gas composition in the present invention is changed, is shown in Table 1, as one example.
The CO₂ and O₂ concentrations in Table 1 are not meant to indicate the maximum concentration, but are rather concentrations with the influence of nickel short circuit taken in consideration; power generation efficiency is still improved by 5%. Further, operation at high concentration may be performed when high power generation efficiency is called for, and can easily be returned to standard operating condition.

**[Table 1]**

| Effect of Cathode Gas Composition on Plant Performance | | | |
|---|---|---|---|
| | Standard Operating Condition | High-Output Operating Condition | |
| Cathode Inlet CO₂ [mol%] | 12 | 30 | |
| O₂ [mol%] | 10 | 20 | |
| Stack AC Output [kW] | 2453 | 2557 | |
| Gas Turbine Output [kW] | 370 | 360 | |
| Facility Power [kW] | 470 | 474 | including oxygen plant |
| Transmission End Output [kW] | 2353 | 2443 | |
| Fuel Flow Rate [Nm³/h] | 422 | 395 | |
| Power Generation Efficiency [LHV%] | 50 | 55 | |
| Heat Recovery Rate [%] | 13 | 6 | |

### Example 2

Voltage deteriorates with operation time in every fuel cell. In general, the life of a fuel cell is defined as the point at which cell voltage deteriorates 10%. If operation time per year is assumed to be 8000 hours and the cell life is five years, that is 40000 hours, deterioration occurs 1% each per half a year, and the output of fuel cell and power generation efficiency will fall 1% per half a year, as well, in proportion to the voltage. However, according to the present invention, CO₂ and O₂ concentration at the cathode can be gradually raised, in correspondence to the deterioration of the fuel cell, thereby keeping the voltage of the fuel cell constant.

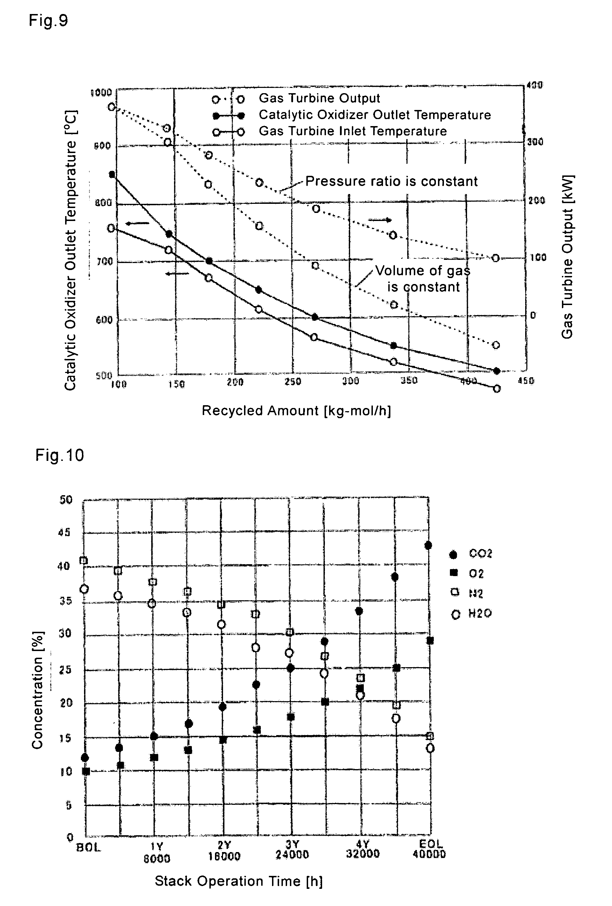

Fig. 10 shows the data for voltage fixed operation. This figure is an example of CO₂ and O₂ concentration change for maintaining the same performance as that of standard operating conditions for five years; by applying such operation, the output and power generation efficiency of the fuel cell can be increased relatively by an average of 5% during cell life. In this method of operation, the time during which CO₂ partial pressure is extremely high is kept short, and therefore the total accumulation of metal nickel, which leads to nickel short circuit, can be suppressed; thus, this is one operating method that can enhance power generation efficiency while suppressing nickel short circuit.

### Example 3

Fig. 7 is a detailed drawing that describes the fuel gas supply system in Fig. 5; the anode outlet is connected to a fuel heater 11 the temperature of the outlet gas from pre-convertor 9 is heated, utilizing the anode exhaust as a heat source, to a temperature close to the operation temperature of fuel gas. The anode exhaust, whose temperature then decreases, is divided into two lines, one of which is connected to an anode exhaust circulation blower, and the blower outlet gas is mixed with externally-supplied fuel gas, such as urban gas. Fuel gas, such as urban gas, is supplied by adjusting its flow rate with a flow control valve 56. Subsequently, it is mixed with steam for reforming such urban gas, and the like. Steam is supplied by adjusting its flow rate with a flow control valve 57.

Although Fig. 7 indicates that mixing occurs in the piping, mixing may be performed by methods such as one that uses a mixer, or one where mixing is performed inside a pre-convertor 9, and the present invention does not specify a mixing method.

This mixed gas is then led to a reforming catalyst layer 10 in a pre-converter 9. Here, reforming of components heavier than ethane in the urban gas occurs, and CO, CO₂, and H₂O in the anode recycle gas undergo methanation reaction. Reforming reaction is an endothermic reaction, while methanation reaction is an exothermic reaction; so, by these two reactions proceeding simultaneously, temperature changes are mutually suppressed, thereby making it easy to maintain the working temperature of the pre-converter to that desired.

Moreover, since MCFC of Fig. 7 is an internal reforming type and the reforming reaction (CH₄+H₂O -> CO+3H₂), which is an endothermic reaction is used for cooling of the fuel cell, it is desirable that the methane concentration is high; by controlling the outlet temperature of the catalyst layer in the pre-converter to 250-450 °C using temperature controller 58, and by controlling the flow rate of urban gas and the like and the flow rate of steam for reforming using rate controller 39 equipped in the anode exhaust circulation blower, the amount of recycling is controlled.

The constituent features of the fuel supplying system of the present invention is: to connect the anode outlet to a fuel heater to decrease the temperature of the anode exhaust; to divide the cooled anode exhaust line in to two systems, of which one is connected to an anode exhaust circulation blower; to mix outlet gas from anode exhaust circulation blower with fuel gas, such as urban gas, and steam for reforming, thereby raising the temperature to that of the gas supplied to the pre-converter without using a heat exchanger; subsequently leading mixed gas to reforming catalyst layer in the pre-converter, which does not have a heat source; to retain an operating temperature in the range of 250-450 °C, so that the methane concentration of the pre-converter outlet gas is increased; and to retain a anode exhaust recycling rate in the range of about 20 to 40% for the same reason.

The performances of the present invention are compared for cases where anode exhaust is recycled and not recycled, and shown in Table 2. Although the power generation efficiency does not change, the heat recovery rate improves drastically.
Moreover, although changing the anode exhaust recycling rate does not change the power generation efficiency of the overall plant, individual factors vary. When the anode recycling rate is raised, the amount of urban gas supplied decreases, as does the amount of steam for reforming supplied, the voltage of the fuel cell drops, and therefore, the output of the fuel cell also drops; the output of the gas turbine decreases, as does the power within the facility. These varying factors are effective in changing the operating conditions of the plant; for example, by increasing the concentration of CO₂ and O₂ in the cathode, the voltage of the fuel cell increases, thereby decreasing heat generation in the fuel cell, which may cause too much cooling of the fuel cell depending on the conditions, but in such a case, by increasing the recycling rate of the anode, the voltage of the fuel cell can be dropped, which in turn leads to a decrease in the amount of urban gas supplied; thus, the heat balance of the fuel cell can be maintained while also maintaining power generation efficiency. In addition, it is also effective to adjust specification of the constitutive apparatus.

**[Table 2]**

| Effect of Anode Recycling on Performance | | | | |
|---|---|---|---|---|
| | Without Recycling | | 20% Recycling | |
| Stack AC Output [kW] | 2538 | | 2453 | |
| Gas Turbine Output [kW] | 464 | | 370 | |
| Facility Power [kW] | 488 | | 470 | |
| Transmission End Output [kW] | 2514 | | 2353 | |
| Fuel Flow Rate [Nm³/h] | 450 | | 422 | |
| Power Generation Efficiency [LHV%] | 50 | | 50 | |
| Heat Recovery Rate [%] | 8 | | 13 | |
| S/C | 2 | | 1.44 | |
| Pre-converter Inlet Temperature [°C] | 375 | | 257 | |
| Pre-converter Outlet Temperature [°C] | 300 | | 320 | |

| Pre-converter Outlet Gas | Flow Rate [kgmol/h] | Composition [%] | Flow Rate [kgmol/h] | Composition [%] |
|---|---|---|---|---|
| CH₄ | 2110 | 29.49 | 21.77 | 24.18 |
| H₂ | 592 | 828 | 3.19 | 354 |
| CO | 0.01 | 0.01 | 0.05 | 0.06 |
| CO₂ | 230 | 322 | 2121 | 2356 |
| H₂O | 4220 | 59.00 | 43.80 | 48.65 |

### Example 4

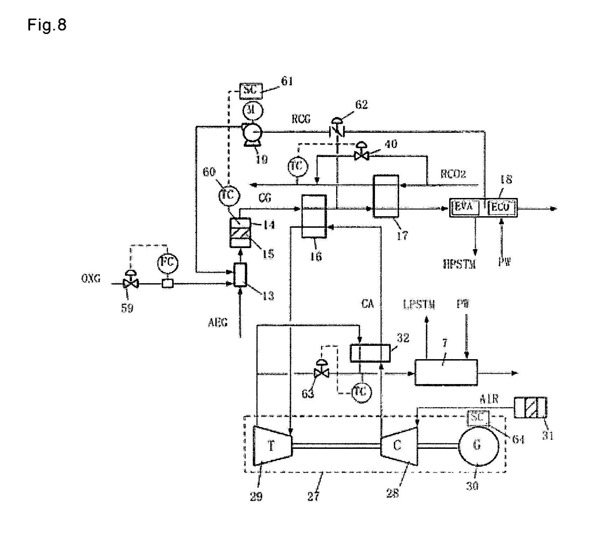

Fig. 8 describes the energy recovery system of Fig. 5 that effectively utilizes combustion heat obtained by the combustion of anode exhaust under oxygen via various heat exchangers.

The anode exhaust AEG is mixed with the oxygen OXG and the recycling combustion gas RCG in a mixer 13. Since the amount of combustible components in anode exhaust is calculable from the amount of fuel supplied, fuel consumed, and the direct-current of the fuel cell, etc., the amount of oxygen required is calculated based on that value, and supplied by controlling with a flow control valve 59. On the other hand, the once cooled combustion gas RCG is recycled to the mixer by a combustion gas recycling blower. Since the rise in temperature becomes excessive if the anode exhaust is simply combusted under oxygen, combustion gas of low-temperature is recycled so that the outlet temperature of the catalytic combustor can be adjusted.

As for the mixed gas of anode exhaust, oxygen, and recycled combustion gas, the combustible gas in the anode exhaust is combusted by the combustion catalyst in the catalytic combustor 14, and the temperature rises. The rate controller 61 in the combustion gas recycling blower controls the flow rate to suit the preset outlet temperature of the catalytic combustor. This preset temperature may be changed as needed.
The combustion gas leaving the catalytic combustor 14 first provides heat to compressed air through a high temperature heat exchanger 16, then provides heat to recycled CO₂ through the CO₂ warmer, and subsequently generates steam in the exhaust heat recovery boiler 18.

In a standard operating condition, combustion gas is recycled when exiting the evaporation part EVA of the exhaust heat recovery boiler. The remaining combustion gas is sent to the water supply heater ECO of the exhaust heat recovery boiler.
On the other hand, in a high-output operation mode, the combustion gas is recycled at the outlet of the high temperature heat exchanger 16. This change is performed by gradually switching the gate opening of the damper 62 from the low temperature side to the high temperature side. Simultaneously, the flow rate of combustion gas recycling blower increases so that the preset value for the outlet temperature of the catalytic combustor is maintained. Therefore, the quantity of the combustion gas, which passes through the high temperature heat exchanger 16 increases, increasing the amount of heat provided to compressed air. Here, the amount of air in the gas turbine is increased by speed controller 64 of the gas turbine generator. As a result, even though the gas turbine output increases, the amount of steam generation is reduced, since the amount of heat going to the exhaust heat recovery boiler decreases.

The standard operating condition and the high-output operating mode are compared in Table 3. By applying the high-output operating mode, power generation efficiency improves by 2 points, but conversely, the heat recovery rate falls by 6 points. Whichever operating mode is desirable is decided by the balance between thermal demand and power demand.

**[Table 3]**

| Comparison of Standard and High-Output Operation | | |
|---|---|---|
| | Standard Operation | High-Output Operation |
| Stack AC Output [kW] | 2453 | 2453 |
| Gas Turbine Output [kW] | 370 | 461 |
| Facility Power [kW] | 470 | 470 |
| Transmission End Output [kW] | 2353 | 2444 |
| Fuel Flow Rate [Nm³/h] | 422 | 422 |
| Power Generation Efficiency [LHV%] | 50 | 52 |
| Heat Recovery Rate [%] | 13 | 7 |

On the other hand, at the gas turbine, which utilizes air as an operation medium, air is compressed with a compressor via a filter 31, and heat exchange with turbine exhaust occurs at the regeneration heat exchanger 32. The outlet temperature at the turbine exhaust side is controlled by this regeneration heat exchanger, and is controlled so that low-pressure steam required for reforming is constantly generated at the exhaust heat recovery boiler 7. Therefore, the temperature of compressed air at the outlet of the regeneration heat exchanger is constant according to the operating condition, but is rather adjusted by the high temperature heat exchanger 16 in this system.
Compressed air heated by the high temperature heat exchanger is led to the turbine, where work is done in the process of expanding to near atmospheric pressure, whereby alternate current is obtained by an electric generator 30. Since this gas turbine collects exhaust heat from fuel cell and generates electricity, and the quantity of exhaust heat changes according to the load of the MCFC side, the electric generator is to be a motor/generator, which is additionally rotation frequency-variable, and the amount of air flow is to be changeable according to the operational status of the fuel cell.

### Example 5

Heat and electricity variable operation is made possible by using the energy recovery system of Fig. 8. The conditions that maximize the electric output are, as described previously, the operation modes in which the position of combustion gas recycling is switched to the high temperature heat exchanger outlet. On the other hand, the operating method which maximizes heat recovery is as described below.

The position for recycling combustion gas is set to the exit of the evaporation part of the exhaust heat recovery boiler, and the preset value of the outlet temperature of the catalyst oxidizer is gradually lowered. This causes the flow rate of combustion gas recycling blower to increase. When the outlet temperature of the catalyst oxidizer decreases, the amount of heat provided to compressed air through high temperature heat exchanger 16 decreases, thereby causing the gas turbine entrance temperature to drop. Thus, the gas turbine output decreases. On the other hand, since the amount of heat that heats recycled CO₂ at the CO₂ heater, in the process, does not change, the amount of evaporation at the exhaust heat recovery boiler increases at an amount corresponding to the decrease in the amount of heat provided to the gas turbine.

The relationship among the amount of combustion gas recycled, the inlet temperature of the gas turbine and the output, are shown in Fig. 9. If the outlet temperature of the catalytic combustor decreases below a certain temperature, the output of the gas turbine becomes zero. At this point, supply of steam for reforming is switched from the exhaust heat recovery boiler on the gas turbine side to the exhaust heat recovery boiler on the combustion gas side, and the gas turbine is turned off. Since all the heat that was contained in the gas turbine during standard operation goes into the exhaust heat recovery boiler on the combustion gas size when the gas turbine is stopped, the amount of heat recovery is at its maximum. Comparison between standard operation and maximum heat recovery is shown in Table 4.

**[Table 4]**

| Comparison of Standard and Maximum Heat Recovery Operation | | |
|---|---|---|
| | Standard Operation | Maximum Heat Recovery |
| Stack AC Output [kW] | 2453 | 2453 |
| Gas Turbine Output [kW] | 370 | 0 |
| Facility Power [kW] | 470 | 490 |
| Transmission End Output [kW] | 2353 | 1963 |
| Fuel Flow Rate [Nm³/h] | 422 | 422 |
| Power Generation Efficiency [LHV%] | 50 | 41 |
| Heat Recovery Rate [%] | 13 | 31 |

The present invention is not limited to the above-described embodiments and various changes can be made without departing the scope of the present invention.

### Reference Signs List

A anode, AEG anode exhaust, AIR air
C cathode, CA compressed air, CG combustion gas
CMP compressor, CO₂G CO₂ gas, CO₂R recovered CO₂
DR drain, ECO water supply heater, EVA evaporation part
EXG exhaust, FG fuel, G electric generator, HM heat medium
HPSTM high-pressure vapor, LAB absorbent liquid which emitted CO₂
LPSTM Low-pressure vapor, M motor, OXG Oxygen
PW treated water, RAB absorbent liquid which absorbed CO₂
RCG recycled combustion gas, RCO₂ recycled CO₂
SC rate control, T turbine, TC temperature control, W water supply
1 desulfurizer, 2 desulfurization agent, 3 Filter, 4 water treatment apparatus,
5 tank for treated water, 6 pump, 7 exhaust heat recovery boiler for low-pressure steam,
8 anode exhaust circulation blower, 9 pre-converter,
10 reforming catalyst, 11 fuel heater, 12 MCFC,
13 mixer, 14 catalytic combustor, 15 combustion catalyst,
16 high temperature heat exchanger, 17 CO₂ heater,
18 exhaust heat recovery boiler for generation of high-pressure steam,
19 combustion gas recycling blower,
20 cooler, 21 KO drum, 22 cooling and dehumidification system,
23 freezer, 24 heat exchanger, 25 KO drum,
26 CO₂ recycling blower, 27 gas turbine generator
28 compressor, 29 turbine, 30 electric generator,
31 filter, 32 low-temperature regeneration heat exchanger,
33 oxygen supply plant, 34 air compressor, 35 air separation plant,
36 cathode gas circulating blower, 37 inverter,
38 internal reformer, 39 rate controller,
40 temperature control valve, 41 fuel humidifier,
42 absorption tower, 43 pump, 44 heat exchanger,
45 regeneration tower, 46 reboiler, 47 pump, 48 cooler,
50 heater for startup, 51 flow control valve, 52 flow control valve,
53 flow control valve, 54 check valve, 55 rate control valve
56 flow control valve, 57 flow control valve, 58 temperature control valve
59 flow control valve, 60 temperature control valve
61 rate control valve, 62 damper, 63 temperature control valve,
70 high concentration CO₂ recovery subsystem
110 air preheater, 120 air, 130 preheated air, 150 SOFC,
200 heat exchanger, 220 water, 230 cooler, 240 drain,
310 coal gasification furnace, 320 desulfurization apparatus, 330 methanol synthesis apparatus,
340 coal, 350 oxygen,
401 fuel cell (MCFC), 402 gas turbine,
403 burner, 404 oxygen tank, 405 methanol tank,
406 cathode, 407 anode, 408 steam generator,
409 steam turbine, 410 cooler, 411 compressor,
412 burner, 413 heat exchanger, 414 cooler,
415 CO₂ recovery subsystem

## Claims

1. A MCFC power generation system comprising a fuel gas supply system for supplying fuel gas to a molten carbonate type fuel cell, wherein said fuel gas supply system comprises:
a fuel heater that connects to an anode outlet; two lines that divide anode exhaust from said fuel heater, of which one line is connected to an anode exhaust circulation blower, mixing outlet gas from said blower with fuel gas externally supplied to said fuel cell, then mixing with steam for reforming, and leading to catalyst layer in a pre-converter, whereby pretreatment of said mixed gas is performed, followed by heating with a fuel heater, and supplying to said fuel cell.

2. The MCFC power generation system of Claim 1, wherein the amount of anode recycling is controlled so that the mixed temperature of the outlet gas from the anode exhaust circulation blower, the externally-supplied fuel gas, and the steam for reforming, is in the range of 250 to 400 °C, thereby obtaining high methane concentration in pre-converter outlet gas.

3. A MCFC power generation system comprising a cathode gas circulation system for circulating cathode gas of a molten carbonate type fuel cell, wherein said cathode gas circulation system comprises:
a closed circulation loop, comprising a cathode gas circulation blower whose intake side connects to a cathode outlet and discharge side connects to a cathode inlet, wherein the cathode outlet side is separated into two lines, one of which is connected to a purge line comprising a flow rate regulation valve, and the other line is connected to a check valve, and further, downstream to said check valve, there is connected an oxygen supplying line and a CO₂ supplying line, each of which comprise a control valve.

4. The MCFC power generation system of Claim 3, in which cathode inlet temperature can be controlled by simply supplying and mixing oxygen and CO₂ to the cathode outlet gas, which passes through the check valve, by building a heat exchanger with temperature control function for controlling temperature of CO₂ supply to the CO₂ supply line.

5. A MCFC power generation system comprising an energy recovery system for recovering energy from anode exhaust of a molten carbonate type fuel cell, wherein said energy recovery system:
leads at least part of anode exhaust to a mixer, wherein said mixer comprises an oxygen supply line and a combustion gas recycle line; and mixed gas from the mixer outlet is led to a catalytic oxidizer, wherein combustible composition in said anode exhaust is combusted under oxygen; and combustion gas exiting said catalytic oxidizer first heats compressed air for a gas turbine that utilizes air as a working medium, then heats recycled CO₂, and is led to an exhaust heat recovery boiler, thereby producing steam; and combustion gas exiting the evaporation side of the exhaust heat recovery boiler is separated into two lines, of which one is connected to a combustion gas recycling blower to recycle cooled combustion gas to the mixer, and the other line feeds to a water supply heater of the exhaust heat recycling boiler.

6. The MCFC power generation system of Claim 5, which comprises a gas turbine that utilizes air as its operation medium, which receives heat from high temperature combustion gas from said catalytic oxidizer through an air heater, and air, which is the above-mentioned operation medium, is independent and does not mix with any other fluids.

7. The MCFC power generation system of Claim 5, which, as a means to collect heat energy from turbine exhaust, is constructed so that compressed air is first heated by a regenerated heat exchanger, and steam is produced by an exhaust heat recovery boiler, subsequently; and at the exhaust heat recovery boiler, temperature of regenerated heat exchanger outlet is controlled so as to enable constant production of steam necessary for reforming.

8. The MCFC power generation system of Claim 5, in which rotation frequency of the combustion gas recycling blower is controlled so as to maintain a constant preset temperature at the outlet of the catalyst oxidization chamber.

9. The MCFC power generation system of Claim 5, which further comprises a damper that enables switching of recycling position of combustion gas from a low temperature part to a high temperature part.

10. A method for operating a MCFC power generation system, wherein, in the MCFC power generation system of Claim 9, the amount of combustion gas passing through an air heater is increased by switching position of recycling combustion gas from a low temperature part to a high temperature part, thereby increasing gas turbine output by increasing amount of heat provided to compressed air, while, conversely decreasing amount of steam production at the exhaust heat recovery boiler.

11. A method for operating a MCFC power generation system, wherein, in the MCFC power generation system of Claim 8, circulation flow rate of the combustion gas recycling blower is gradually increased by gradually reducing the set value for the outlet temperature of the catalytic oxidizer, thereby decreasing the outlet temperature of the catalytic oxidizer, and decreasing the amount of heat provided to the compressed air through the air heater, thereby decreasing output of gas turbine, and conversely increasing the amount of steam production at the exhaust heat recovery boiler.

12. The method for operating a MCFC power generation system of Claim 11, wherein the amount of steam production by the exhaust heat recovery boiler is at a maximum, when the supply of steam for reforming is switched from the exhaust heat recovery boiler at the gas turbine side to that at the combustion gas side while gas turbine output is near zero, and then the gas turbine is turned off.

13. A method for operating a MCFC power generation system, wherein, in the MCFC power generation system of Claim 3, the voltage of the fuel cell is maintained at a near constant throughout its life, by increasing the concentration of CO₂ and O₂ in the cathode circulation system in an amount that corresponds to voltage degradation, in correspondence with time-dependent voltage degradation of fuel cell.
